# EUROPEAN PATENT APPLICATION

(11) **EP 3 889 061 A1**
(43) Date of publication of application: **06.10.2021**
(21) Application number: 20382253.1
(22) Date of filing: 31.03.2020
(51) Int. Cl.: B65D 41/04, B65D 51/14, B65D 53/02, B65D 79/00

(54) **VACUUM, GAS AND LIQUID TIGHT CONTAINER WITH A REUSABLE CAP**

(71) Applicant: Böttger, Bettina, 2765-227 Estoril (PT)
(72) Inventor: Böttger, Bettina, 2765-227 Estoril (PT)
(74) Representative: Juncosa Miró, Jaime

(57) **Abstract**

A vacuum, gas and liquid tight container with a reusable cap, including a glass receptacle (10) with a receptacle opening (11) surrounded by an annular mouth (12) and by a cylindrical neck (13) including a thread (14); a cap (20) made of metal sheet including a closing portion (30) completely covering the receptacle opening (11) and an engagement portion (40) with engagement configurations (44) complementary to the thread (14); and a sealing ring (50), wherein the closing portion (30) includes an inner annular protrusion (31), the sealing ring (50) being compressed between the annular mouth (12) and the inner annular protrusion (31); the engagement portion including radial protrusions (41), directed inwards and determining a local narrowing, the sealing ring (50) being not adhered to the cap and being retained within the cap (20) when unscrewed by having an outer diameter bigger than the local narrowing.

## Description

### Technical field

The present invention is directed to a vacuum, gas and liquid tight-container with a reusable cap. The vacuum tight container is a container which can maintain an inner gas pressure lower than the ambient air without collapsing. This is appropriate mainly for food conservation and storage.

The cap, in order to be reusable, is made of a durable and oxide-resistant material and include a releasable sealing ring allowing for cleaning operations.

### State of the Art

Document US3307728 describes a container with a cap made of a folded metal sheet, said cap comprising a closing portion for completely covering the receptacle opening, and an independent engagement portion to provide engagement between the cap and the receptacle producing a compression force on the closing portion towards the annular mouth.

In this solution the sealing ring is not adhered but mounted in an annular groove defined in the periphery of the closing portion.

Document US3219223 describes a container similar to the previously described solution in which the closing portion includes a sealing ring molded in, and therefore adhered to, the closing portion. The adherence of the sealing ring to the closing portion is further increased by the periphery of the sealing ring being inserted in an annular groove defined in the periphery of the closing portion.

On the previous documents US3307728 and US3219223 the cap is made of a weak material, such aluminum, selected to be deformed by pressing the engagement portion thereof against the thread of the receptacle, causing the deformation of the cap which adopts the shape of the thread of the receptacle against which it is pressed. Therefore, because it is made of a deformable material, said engagement portion could be easily deformed or bended accidentally during manipulation operations, reducing the reusability of the cap.

Also, on both documents, the closing portion is retained into the engagement portion, preventing proper cleaning operations.

Furthermore, the tinplate and other metals shall be varnished or painted to prevent oxidation and to permit the adhesion of the sealing ring thereon, and this varnish or paint enters in contact with the food or beverage stored in the container. As well these materials and their applications makes it unlikely to be reused due to potential interferences of the varnish in utilization.

Those and other problems are solved by the present patent application.

### Brief description of the invention

The present invention proposes, in a manner already known in the state of the art, a vacuum, gas and liquid tight container with a reusable cap including:
- a glass receptacle provided with a receptacle opening surrounded by a cylindrical neck including a thread on a cylindrical outer surface thereof, said cylindrical neck defining an annular mouth surrounding the receptacle opening;
- a cap made of metal sheet including a closing portion completely covering the receptacle opening and an engagement portion including a cylindrical segment with an inner diameter surrounding the cylindrical neck, including engagement configurations defined by local deformations or folds of the metal sheet, which are complementary to the thread to provide engagement between the cap and the glass receptacle producing a compression force on the closing portion towards the annular mouth; and
- a sealing ring with an outer diameter equal to or smaller than the inner diameter of the cylindrical segment and compressed between the annular mouth and the closure portion, providing a tight seal;

According to that the proposed container comprises a glass receptacle with a receptacle opening and a reusable cap made of a metal sheet to seal said receptacle opening with a closing portion of said cap.

The receptacle opening is surrounded by an annular mouth defined on an end border of a cylindrical neck made of the glass constitutive of the glass receptacle. A cylindrical outer surface of the cylindrical neck includes a thread also made of the glass constitutive of the glass receptacle.

The cap can be attached or released from the glass receptacle by engagement configurations, included in an engagement portion of the cap, which are complementary to the thread of the cylindrical neck. Said engagement configurations are defined by local deformations or folds of the metal sheet.

When the engagement configurations are connected to the thread of the cylindrical neck a compression force is produced pushing the closing portion towards the annular mouth of the glass receptacle, compressing a sealing ring in between. The sealing ring can be made of a suitable air-tight elastic or deformable material, such plastic, rubber, silicone, cork or others.

The present invention further proposes the following features which are not known from the available prior art:
- the closing portion includes an inner annular protrusion, which is concentric with the cylindrical segment and protrudes towards the receptacle opening, the sealing ring being compressed between the annular mouth and the annular protrusion and being retained in a centered position between said annular protrusion and the inner diameter of the cylindrical segment;
- the cylindrical segment includes one or multiple radial protrusions, directed inwards, defined by local deformations of the metal sheet and placed between the closing portion and the engagement configurations, said radial protrusions determining a local narrowing of the inner diameter of the cylindrical segment, the sealing ring being retained within the cap when unscrewed from the glass receptacle by having an outer diameter bigger than the local narrowing; and
- the sealing ring is not adhered to the cap.

According to that, the closing portion includes an inner annular protrusion. It will be understood that said inner annular protrusion is a continuous protrusion with a circular shape and concentric with the cylindrical segment and therefore also concentric with the annular mouth of the glass receptacle when the cap is attached thereto.

Said inner annular protrusion protrudes from the closing portion towards the receptacle opening when the cap is attached to the glass receptacle, it is to say towards the interior of the cap.

When the cap is attached to the glass cap the sealing ring is compressed between the annular mouth of the glass receptacle and said inner annular protrusion, concentrating most or all the compression force applied to the sealing ring by the cap on said inner annular protrusion, increasing the obtained sealing without increasing the closing and opening force required to open and close the cap, preventing the entrance of food or beverage between the sealing ring and the annular mouth and/or the closing portion of the cap.

The sealing ring is retained between said inner annular protrusion and the inner diameter of the cylindrical segment when the cap is attached to the glass receptacle, preventing an undesired radial movement of the sealing ring, for example due to the suction produced by a vacuum existent within the glass receptacle, or due to an overpressure existent within the glass receptacle during its heating for example for an sterilization process.

The cylindrical segment of the engagement portion further comprises radial protrusions directed inwards, said radial protrusions being formed by local deformations of the metal sheet. It will be understood that the radial direction and the inward direction are defined in regard to the center of the engagement portion which has a general cylindrical shape which is concentric and surrounds the cylindrical neck of the glass receptacle when the cap is attached to the glass receptacle.

Said radial protrusions are placed between the closing portion and the engagement configurations of the cap determining a local narrowing of the inner diameter of the cylindrical segment, it is to say a reduction in its inner diameter.

The sealing ring is not adhered to the cap, so it is loose in regard to the cap.

Said sealing ring is bigger than the local narrowing of the inner diameter of the cylindrical segment produced by the radial protrusions, so that its outer region interferes with the radial protrusions retaining the sealing ring within the cap between the closing portion and the radial protrusions preventing its fall from the cap when the cap is unscrewed from the glass receptacle.

This feature allows the sealing ring to be retained within the cap even when the cap is separated from the glass receptacle, but allowing the release of the sealing ring from the cap by elastic deformation of the sealing ring for cleaning or substitution, increasing the reusability of the cap.

The local narrowing has a diameter bigger than the cylindrical outer surface of the cylindrical neck. Because the sealing ring has an outer diameter bigger than the local narrowing, and preferably equal to the inner diameter of the cylindrical segment of the engagement portion, the sealing ring extends far beyond the outer edge of the annular mouth.

Furthermore, when the cap is attached to the glass receptacle in closed position, and the glass receptacle is under vacuum conditions, the proposed configuration makes easier to break the hermetic seal. When the cap is unscrewed from the thread of the glass receptacle the radial protrusions moves upwards pulling up the outer region of the sealing ring, producing the deformation of the sealing ring and facilitating its separation from the annular mouth and the breakage of the hermetic sealing.

According to an alternative embodiment of the present invention, the cap is made of stainless steel, which is a durable material because it does not rust and because it is a hard and resistant which cannot be easily deformed accidentally. Furthermore, the stiffness of the stainless steel reduces the deformations produces on the cap when is attached to the glass receptacle, assuring a better transmission of the compression force from cap to the sealing ring, permitting the application of a greater compression force on said sealing ring achieving an improved sealing.

Said stainless steel cap is preferably unpainted and unvarnished, preventing the contact of the food or beverage contained in the receptacle with potentially hazardous substances presents on varnishes and paints. The unpainted and unvarnished stainless steel is not compatible with adhesives, preventing the adhesion of a sealing ring on it.

Optionally said one or more radial protrusions is one continuous protrusion surrounding the cylindrical segment, producing a better retention of the sealing ring and a uniform deformation of all the outer region thereof. Alternatively, the radial protrusions are multiple discrete protrusions, making easier the insertion and extraction of the sealing ring.

The inner annular protrusion of the closing portion can be:
- a frustoconical surface compressing an inner region of the sealing ring against an inner edge of the annular mouth; or
- a protrusion with a V-shaped section defining a circular edge which compresses an inner region of the sealing ring against the annular mouth or against an inner edge of the annular mouth.

The inner edge of the annular mouth is the circular edge of the annular mouth having the smallest diameter, and the outer edge of the annular mouth is the circular edge of the annular mouth having the biggest diameter. Optionally said inner edge can be flattened producing a frustoconical surface parallel to the frustoconical surface of the inner annular protrusion.

The inner region of the sealing ring is the region thereof closest to the center of the sealing ring, and the outer region is the region thereof farthest from the center of the sealing ring.

Said frustoconical surface is preferably defined as a circular step between two non-coplanar regions of the closure portion. Preferably said frustoconical surface is vertically aligned with or vertically adjacent to the inner edge of the annular mouth when the cap is attached to the glass receptacle. Said inner edge of the annular mouth can be flattened.

Said protrusion having a V-shaped section is defined by an annular deformation of the metal sheet constitutive of the closing portion of the cap, producing an annular groove and one complementary annular protrusion on opposed sides of the closing portion of the cap.

According to an additional embodiment, the closing portion further comprises an outer annular protrusion which is concentric with the cylindrical segment, surrounding the inner annular protrusion, and which protrudes towards the receptacle opening, the sealing ring being compressed between the annular mouth and the outer annular protrusion, preventing the entrance of air between the sealing ring and the annular mouth and/or the closing portion of the cap. Preferably said outer annular protrusion is vertically aligned with or vertically adjacent to the outer edge of the annular mouth.

Said outer annular protrusion can be, for example:
- a frustoconical surface compressing an outer region of the sealing ring against an outer edge of the annular mouth; or
- a protrusion with a V-shaped section defining a circular edge which compresses an outer region of the sealing ring against the annular mouth or against an outer edge of the annular mouth.

Optionally said outer edge can be flattened and can produce a frustoconical surface parallel to the frustoconical surface of the outer annular protrusion.

Preferably the closing portion is in contact with the sealing ring only through the inner annular protrusion or only through the inner and the outer annular protrusions, so that all the compression force applied by the cap to the sealing ring is concentrate on that areas, improving the sealing.

The outer diameter of the sealing ring is proposed to be slightly smaller than the inner diameter of the cylindrical segment, defining a sealing ring expansion chamber in between which allows the radial expansion of the sealing ring when compressed between the closure portion and the annular mouth, permitting a greater deformation of the sealing ring and improving the sealing achieved.

According to one proposed embodiment of the present invention, the closing portion and the engagement portion of the cap are independent to each other, two separated elements. In this case the engagement portion will further comprise a ring mouth segment overlapped to a perimeter area of the closing portion, retaining said closing portion between the ring mouth segment and the sealing ring.

According to that, when the cap is separated from the glass receptacle, the sealing ring is retained within the cap by said radial protrusions directed inwards, and the closing portion is retained within the cap between the sealing ring and the ring mouth segment of the engagement portion.

Preferably the closing portion has an outer diameter equal or smaller than the narrowing of the inner diameter of the cylindrical segment and equal or smaller than the engagement configurations of the cylindrical segment so that, once the sealing ring is removed, the closing portion can be also removed from the cap for cleaning or renovation operations. When said sizes are equal a little pressure can be required to extract said closing portion from the cap.

The closing portion can also include a bumped central area collapsible under a vacuum existent in the interior of the container as a tamper evidence.

According to an additional embodiment, the metal sheet of the engagement portion has a first thickness, and the metal sheet of the closing portion has a second thickness smaller than the first thickness, obtaining a stiffer and more durable engagement portion and a closing portion with sufficient flexibility to permit the collapse of the bumped central area under certain predefined vacuum level.

Preferably the first thickness is comprised between 0,3mm and 0,2mm and the second thickness is comprised between 0,15mm and 0,1mm, and preferably the sealing ring has a thickness comprised between 1,5mm and 2,5mm.

It will also be understood that any range of values given may not be optimal in extreme values and may require adaptations of the invention to these extreme values are applicable, such adaptations being within reach of a skilled person.

Other features of the invention appear from the following detailed description of an embodiment.

### Brief description of the Figures

The foregoing and other advantages and features will be more fully understood from the following detailed description of an embodiment with reference to the accompanying drawings, to be taken in an illustrative and non-limitative manner, in which:
Fig. 1a and 1b shows a transversal section of a tight container in an exploded view and in an assembled view according to a first embodiment in which the engagement portion and the closing portion are parts of the same cap made of a single metal sheet;
Fig. 2a and 2b shows a transversal section of a tight container in an exploded view and in an assembled view according to a second embodiment in which the engagement portion and the closing portion are parts of the same cap made of a single metal sheet;
Fig. 3a and 3b shows a transversal section of a tight container in an exploded view and in an assembled view according to a third embodiment in which the engagement portion and the closing portion are independent parts of the same cap made of a different metal sheets;
Fig. 4a and 4b shows a transversal section of a tight container in an exploded view and in an assembled view according to a fourth embodiment in which the engagement portion and the closing portion are independent parts of the same cap made of a different metal sheets.

### Detailed description of an embodiment

The foregoing and other advantages and features will be more fully understood from the following detailed description of an embodiment with reference to the accompanying drawings, to be taken in an illustrative and not limitative.

The present invention is directed to a vacuum, gas and liquid tight container with a reusable cap 20.

Said container is made of three principal parts: a glass receptacle 10 with a receptacle opening 11, a cap 20 with a closing portion 30 completely covering said receptacle opening 11 and a sealing ring 50 compressed therebetween providing a tight seal.

The glass receptacle 10 further comprises a cylindrical neck 13 including an annular mouth 12 on one end, said cylindrical neck 13 and annular mouth 12 surrounding the receptacle opening 11. The cylindrical neck 13 further comprises a thread 14 on its outer surface.

The cap 20 is made of metal sheet and includes said closing portion 30 and an engagement portion 40 which includes a cylindrical segment 43 with an inner diameter surrounding the cylindrical neck 13. Said cylindrical segment 43 includes engagement configurations 44 defined by local deformations of the metal sheet which are complementary to the thread 14 of the glass receptacle.

Said engagement configurations 44 are protrusions of the cylindrical segment 43 projecting inwards the cap 20 in positions adapted to engage with the thread when the cap 20 is coupled to the glass receptacle 10. Said engagement configurations 44 provide an attachment of the cap 20 to the glass receptacle 10 and generates a compression force which pushes the closing portion 30 towards the annular mouth 12 of the glass receptacle 10, generating a compression force on the sealing ring 50 placed there between.

The sealing ring 50 has an outer diameter equal to or smaller than the inner diameter of the cylindrical segment 43 and is compressed between the annular mouth 12 and the closure portion 30 providing said tight seal.

The cylindrical segment 43 further includes, between the closing portion 30 and the engagement configurations 44, one continuous radial protrusion 41 surrounding all the cylindrical segment 43 and defining a local narrowing on the inner diameter of the cylindrical segment 43.

The sealing ring 50, which is not adhered to the cap 20, has an outer diameter bigger than the local narrowing and equal or smaller than the inner diameter of the cylindrical segment 43, so that said sealing ring 50 can be introduced by elastic deformation into the cap 20, surrounded by the cylindrical segment 43, and retained between the radial protrusion 41 and the coupling portion 30.

In this position the sealing ring 50 is retained in the cap 20 by said radial protrusions 41 even when the cap 20 is separated from the glass receptacle 10, but it can be removed by elastic deformation for cleaning operations.

An additional function of said radial protrusion 41 is to rise the periphery of the sealing ring 50 during the opening of the container, producing the deformation of the sealing ring 50 facilitating the entrance of gases and the breakage of a vacuum existing in the glass receptacle.

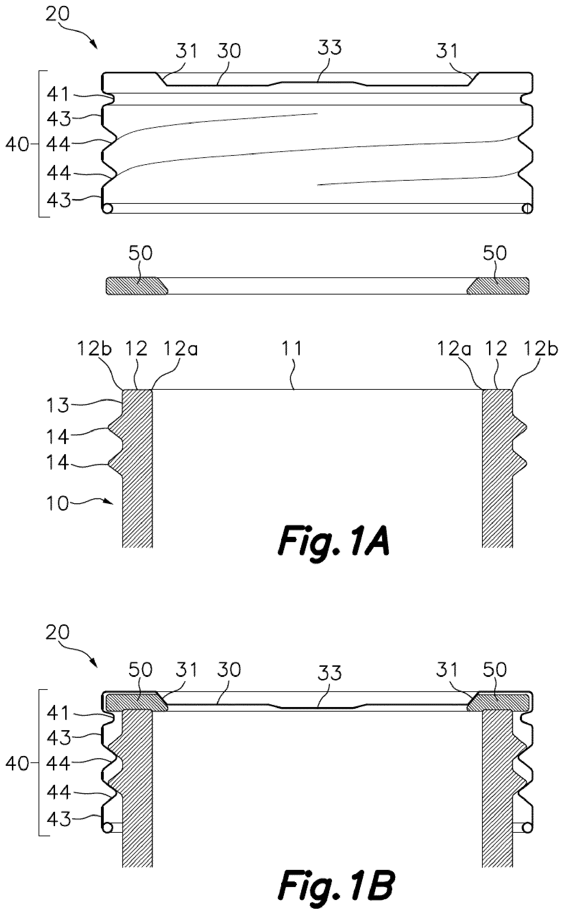

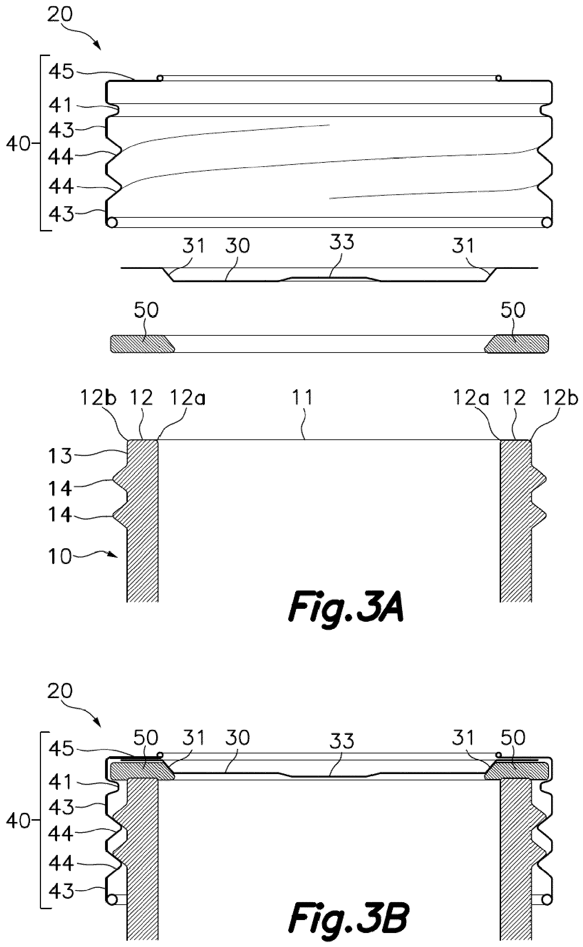

According to the first and a third embodiments shown on Figs. 1a, 1b, 3a and 3b the closing portion includes two regions non-coplanar two each other connected through the inner annular protrusion 31 which has a frustoconical shape, the region facing the receptacle opening 11 being at a lower level than the region facing the annular mouth 12.

According to this embodiment, the inner annular protrusion 31 with frustoconical shape faces the inner edge 12a of the annular mouth 12, compressing the sealing ring 50 against said inner edge 12a.

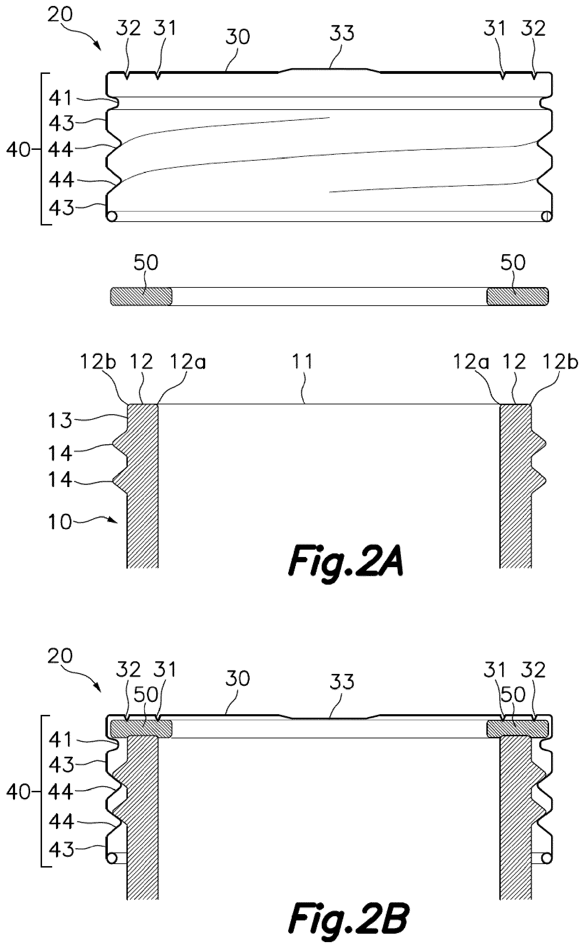

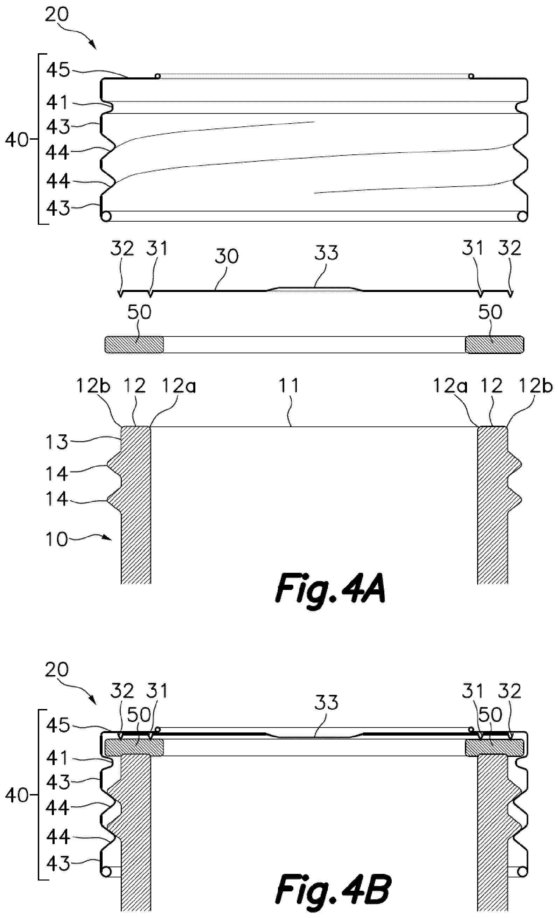

In an alternative second and fourth embodiments shown on Figs. 2a, 2b, 4a and 4b the closing portion includes two circular concentric grooves defined by two annular deformations of the metal sheet, each of said grooves having an V-shaped cross section and defining an inner annular protrusion 31 and an outer annular protrusion 32 on the side of the closing portion 30 facing the annular mouth 12.

The inner annular protrusion 31 compresses the sealing ring 50 against the inner edge 12a of the annular mouth 12, and the outer annular protrusion 32 compresses the sealing ring 50 against the outer edge 12b of the annular mouth 12. It will be evident that the outer annular protrusion 32 is optional.

Also, according the embodiments shown on Figs. 1a, 1b, 2a and 2b, the cap 20 is made of a single metal sheet defining therein the engagement portion 40 and the closing portion 30.

Alternatively, according to the embodiments shown on Figs. 3a, 3b, 4a and 4b, the cap 20 is made of two separated and independent parts, one corresponding to the closing portion 30 and one corresponding to the engagement portion 40, which in this case further comprises a ring mouth segment 45 connected to the cylindrical segment 43 and covering a perimetral region of the closing portion 30 placed above the sealing ring 50. Said ring mouth segment 45 transfers the compression force from the cylindrical segment 43 to the closing portion 30. According to this embodiment the closing portion 30 preferably has an outer diameter equal or smaller than the engagement configurations 44, and equal or smaller than the radial protrusion 41, permitting the extraction of said closing portion 30 from the cap 20 for cleaning operations. The sealing ring 50 retained within the cap 20 by the radial protrusions 41 will also retain said closing portion 30 while in place.

It is also proposed to include, in the closing portion 30, bumped central area 33 collapsible under a vacuum existent in the interior of the container as a tamper evidence. In normal conditions said bumped central area 33 projects outwards from the cap 20, as shown on Fig. 1a, 2a, 3a and 4a, but when the cap 20 is closed and certain amount of vacuum is created within the glass receptacle 20, then the bumped central area 33 collapses and inverts it position to project inwards, as shown on Figs. 1b, 2b, 3b and 4b.

When the closing portion 30 and the engagement portion 40 are separated portions made of different metal sheets, the closing portion 30 can be made of a thinner metal sheet than the engagement portion 40 so that the bumped central area 33 can collapse under a small level of vacuum existent in the interior of the container and at the same time the engagement portion is stiff and does not bend or deform easily.

It will be understood that various parts of one embodiment of the invention can be freely combined with parts described in other embodiments, even being said combination not explicitly described, provided there is no harm in such combination.

## Claims

1. A vacuum, gas and liquid tight container with a reusable cap, including:
• a glass receptacle (10) provided with a receptacle opening (11) surrounded by a cylindrical neck (13) including a thread (14) on a cylindrical outer surface thereof, said cylindrical neck (13) defining an annular mouth (12) surrounding the receptacle opening (11);
• a cap (20) made of metal sheet including a closing portion (30) completely covering the receptacle opening (11) and an engagement portion (40) including a cylindrical segment (43) with an inner diameter surrounding the cylindrical neck (13), including engagement configurations (44) defined by local deformations or folds of the metal sheet which are complementary to the thread (14) to provide engagement between the cap (20) and the glass receptacle (10) producing a compression force on the closing portion (30) towards the annular mouth (12); and
• a sealing ring (50) with an outer diameter equal to or smaller than the inner diameter of the cylindrical segment (43) and compressed between the annular mouth (12) and the closure portion (30) providing a tight seal;
**characterized in that**
the closing portion (30) includes an inner annular protrusion (31), which is concentric with the cylindrical segment (43) and protrudes towards the receptacle opening (11), the sealing ring (50) being compressed between the annular mouth (12) and the inner annular protrusion (31) and being retained in a centered position between said inner annular protrusion (31) and the inner diameter of the cylindrical segment (43);
the cylindrical segment (43) includes one or multiple radial protrusions (41), directed inwards, defined by local deformations of the metal sheet and placed between the closing portion (30) and the engagement configurations (44), said radial protrusions (41) determining a local narrowing of the inner diameter of the cylindrical segment (43), the sealing ring (50) being retained within the cap (20) when unscrewed from the glass receptacle (10) by having an outer diameter bigger than the local narrowing; and
the sealing ring (50) is not adhered to the cap (20).

2. The vacuum, gas and liquid tight container according to claim 1 wherein the cap (20) is made of unpainted and unvarnished stainless steel.

3. The vacuum, gas and liquid tight container according to claim 1 or 2 wherein said one or more radial protrusions (41) is one continuous protrusion surrounding the cylindrical segment (43) of the engagement portion (40).

4. The vacuum, gas and liquid tight container according to any preceding claim wherein the inner annular protrusion (31) of the closing portion (30) is
• a frustoconical surface compressing an inner region of the sealing ring (50) against an inner edge (12a) of the annular mouth (12); or
• a protrusion with a V-shaped section defining a circular edge which compresses an inner region of the sealing ring (50) against the annular mouth (12) or against an inner edge (12a) of the annular mouth (12).

5. The vacuum, gas and liquid tight container according to any preceding claim wherein the closing portion (30) further comprises an outer annular protrusion (32) which is concentric with the cylindrical segment (43), surrounding the inner annular protrusion (31), and protrudes towards the receptacle opening (11), the sealing ring (50) being compressed between the annular mouth (12) and the outer annular protrusion (32).

6. The vacuum, gas and liquid tight container according to claim 5 wherein said outer annular protrusion (32) is
• a frustoconical surface compressing an outer region of the sealing ring (50) against an outer edge (12b) of the annular mouth (12); or
• a protrusion with a V-shaped section defining a circular edge which compresses an outer region of the sealing ring (50) against the annular mouth (12) or against an outer edge (12b) of the annular mouth (12).

7. The vacuum, gas and liquid tight container according to any preceding claim wherein the closing portion (30) is in contact with the sealing ring (50) only through the inner annular protrusion (31) or only through the inner and the outer annular protrusions (31, 32).

8. The vacuum, gas and liquid tight container according to any preceding claim wherein the outer diameter of the sealing ring (50) is smaller than the inner diameter of the cylindrical segment (43), defining a sealing ring expansion chamber in between.

9. The vacuum, gas and liquid tight container according to any preceding claim wherein the closing portion (30) and the engagement portion (40) of the cap (20) are independent to each other, and wherein the engagement portion (40) further comprises a ring mouth segment (45) overlapped to a perimeter area of the closing portion (30), retaining said closing portion (30) between the ring mouth segment (45) and the sealing ring (50).

10. The vacuum, gas and liquid tight container according to claim 9 wherein the closing portion (30) has an outer diameter equal or smaller than the local narrowing of the inner diameter of the cylindrical segment (43) and equal or smaller than the engagement configurations (44) of the cylindrical segment (43).

11. The vacuum, gas and liquid tight according to claim 9 or 10 wherein the closing portion (30) includes a bumped central area (33) collapsible under a vacuum existent in the interior of the container as a tamper evidence.

12. The vacuum, gas and liquid tight container according to claim 11 wherein the metal sheet of the engagement portion has a first thickness, and the metal sheet of the closing portion has a second thickness smaller than the first thickness.

13. The vacuum, gas and liquid tight container according to claim 12 wherein the first thickness is comprised between 0,3mm and 0,2mm and the second thickness is comprised between 0,15mm and 0,1mm.

14. The vacuum, gas and liquid tight container according to any preceding claim wherein the sealing ring is made of cork or rubber.

15. The vacuum, gas and liquid tight container according to any preceding claim wherein sealing ring has a thickness comprised between 1,5mm and 2,5mm.
